# EUROPEAN PATENT APPLICATION

(11) **EP 4 761 061 A1**
(43) Date of publication of application: **17.06.2026**
(21) Application number: 24868569.5
(22) Date of filing: 10.09.2024
(51) Int. Cl.: H02J 50/90, H02J 50/80, H02J 50/12

(54) **ELECTRONIC DEVICE AND POWER TRANSMISSION METHOD**

(30) Priority: 18.09.2023 KR 20230124053; 15.11.2023 KR 20230158290
(71) Applicant: Samsung Electronics Co., Ltd., Suwon-si, Gyeonggi-do 16677 (KR)
(72) Inventor: SONG, Mingi, Suwon-si, Gyeonggi-do 16677 (KR); LEE, Juhyang, Suwon-si, Gyeonggi-do 16677 (KR); YUN, Yongsang, Suwon-si, Gyeonggi-do 16677 (KR)
(74) Representative: Gulde & Partner
(86) International application number: PCT/KR2024/013716
(87) International publication number: WO 2025/063591

(57) **Abstract**

An electronic device of the present disclosure may comprise: a power transmission circuit; and a processor, wherein the processor: transmits Q ping through the power transmission circuit; when a change of a Q factor is detected, identifies whether the value of the Q factor is smaller than or equal to a designated value; if the value of the Q factor is smaller than or equal to the designated value, controls the power transmission circuit such that the voltage induced in a power reception device is in a first voltage range; and if the value of the Q factor is greater than the designated value, controls the power transmission circuit such that the voltage induced in the power reception device is in a second voltage range having a power level higher than that of the first voltage range.

## Description

### [Technical Field]

The disclosure relates to an electronic device and a power transmission method.

### [Background Art]

An electronic device may perform wireless or contactless charging by using wireless power transfer (WPT) technology. WPT technology may refer to a technology in which power is wirelessly transferred from a power transmission device to a power reception device without a connection via a separate connector so that a battery of the power reception device is charged. The WPT technology may include a magnetic induction scheme and a magnetic resonance scheme, and may also include various other wireless power transmission technologies.

### [Disclosure of Invention]

### [Technical Problem]

An electronic device capable of transmitting wireless power may transmit power to various types of electronic devices (e.g., smartphones, smartwatches, and earbuds). When transmitting and receiving power via electromagnetic induction, a coupling coefficient between an electronic device for transmitting power and an electronic device (e.g., a smartphone, a smartwatch, and an earbud) for receiving power may differ, and a turns ratio of a coil may differ for each electronic device for receiving power. Therefore, there is a problem in that the magnitude of a voltage induced in each electronic device receiving power differs for each device.

The electronic device and power transmission method of the disclosure have a purpose of changing a transmission voltage by measuring a Q factor.

An electronic device of the disclosure may include a power transmission circuit and a processor, and the processor may transmit a Q ping through the power transmission circuit, identify, when a variation of a Q factor is detected, whether a value of the Q factor is less than or equal to a specified value, control the power transmission circuit such that a voltage induced in a power reception device falls within a first voltage range when the value of the Q factor is less than or equal to the specified value, and control the power transmission circuit such that a voltage induced in the power reception device falls within a second voltage range having a higher power level than the first voltage range when the value of the Q factor is greater than the specified value.

A power transmission method of the disclosure may include an operation of transmitting a Q ping through a power transmission circuit, an operation of identifying, when a variation of a Q factor is detected, whether a value of the Q factor is less than or equal to a specified value, an operation of controlling the power transmission circuit such that a voltage induced in a power reception device falls within a first voltage range when the value of the Q factor is less than or equal to the specified value, and an operation of controlling the power transmission circuit such that the voltage induced in the power reception device falls within a second voltage range having a higher power level than the first voltage range when the value of the Q factor is greater than the specified value.

The electronic device and the power transmission method of the disclosure may improve the stability of a power transmission and reception operation by changing a transmission voltage based on a measured Q factor.

### [Brief Description of Drawings]

In describing the drawings, the same or similar elements may be denoted by the same or similar reference numerals.
FIG. 1 is a block diagram of an electronic device in a network environment according to various embodiments of the disclosure.
FIG. 2 is a diagram illustrating an electronic device according to an embodiment of the disclosure.
FIG. 3 is a block diagram illustrating a wireless charging system according to various embodiments.
FIG. 4 is a diagram illustrating a power transmission circuit of an electronic device according to an embodiment of the disclosure.
FIG. 5A is a flowchart illustrating a power transmission method of an electronic device according to an embodiment of the disclosure.
FIG. 5B is a flowchart illustrating a power transmission method of an electronic device according to an embodiment of the disclosure.
FIG. 6 is a graph illustrating power induced in a power reception device when an electronic device transmits power within a second voltage range according to an embodiment of the disclosure.
FIG. 7 is a graph illustrating power induced in a power reception device when an electronic device transmits power within a first voltage range according to an embodiment of the disclosure.

### [Mode for the Invention]

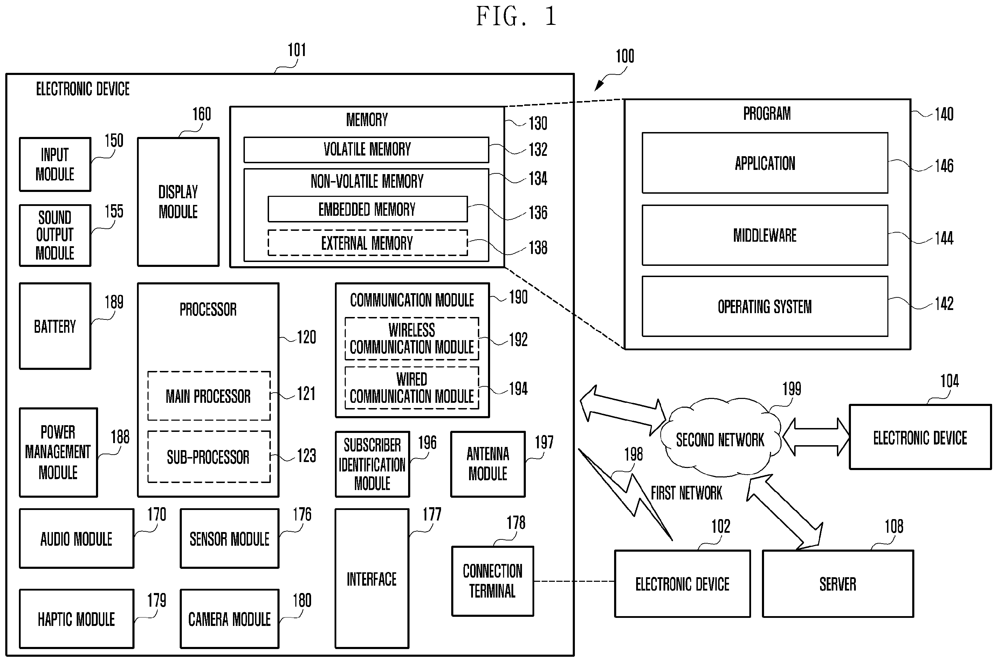

Fig. 1 is a block diagram illustrating an electronic device 101 in a network environment 100 according to various embodiments.

Referring to Fig. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module(SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, a RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

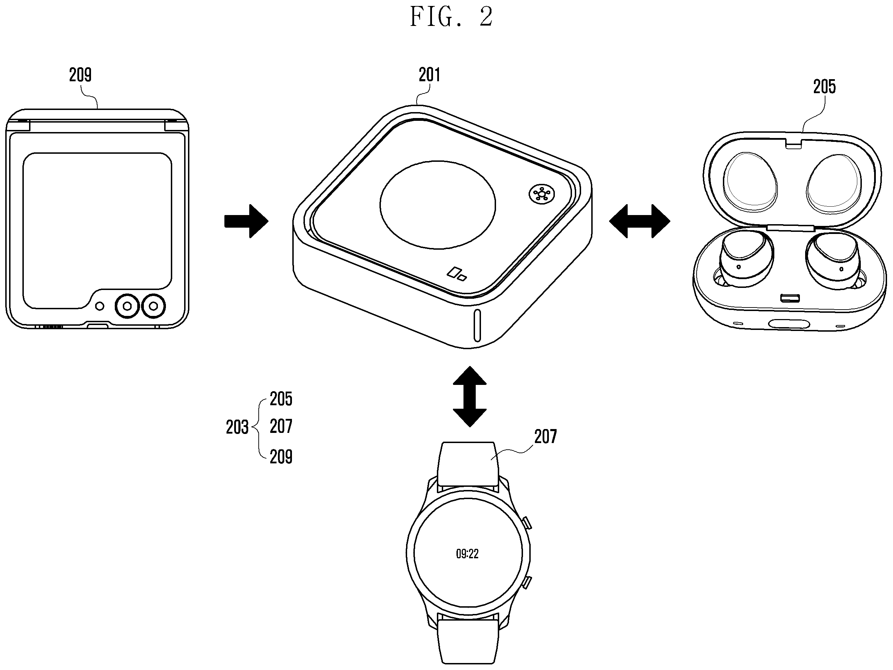

FIG. 2 is a diagram illustrating an electronic device 201 and external electronic devices 203, 205, and 207 according to an embodiment of the disclosure.

The electronic device 201 may include a charging cradle and/or a charging pad. In an embodiment, the electronic device 201 may include an electronic device (e.g., a portable communication device (smartphone)) capable of operating in a power transmission mode. The electronic device 201 may transmit power to the external electronic devices 203, 205, and 207 wirelessly.

The electronic device 201 of FIG. 2 may be the same as the electronic device 101 of FIG. 1. However, this is not limitative, and the electronic device 201 in FIG. 2 may have at least some of the components of the electronic device 101 in FIG. 1 omitted or added.

In an embodiment, the electronic device 201 is a power transmission device, and the external electronic devices 203, 205, and 207 may be power reception devices.

In an embodiment, the electronic device 201 may receive power from various external electronic devices 203, 205, and 207. The external devices 203, 205, and 207 may be the smartphone 203 or wearable devices (e.g., the smartwatch 205 or earbuds 207). Each of the electronic device 201 and the external devices 203, 205, and 207 may include a coil for transmitting/receiving power. The coils of the external devices 203, 205, and 207 may have different turns ratios. In addition, coupling coefficients between the electronic device 201 and the respective external devices 203, 205, and 207 may be different from each other.

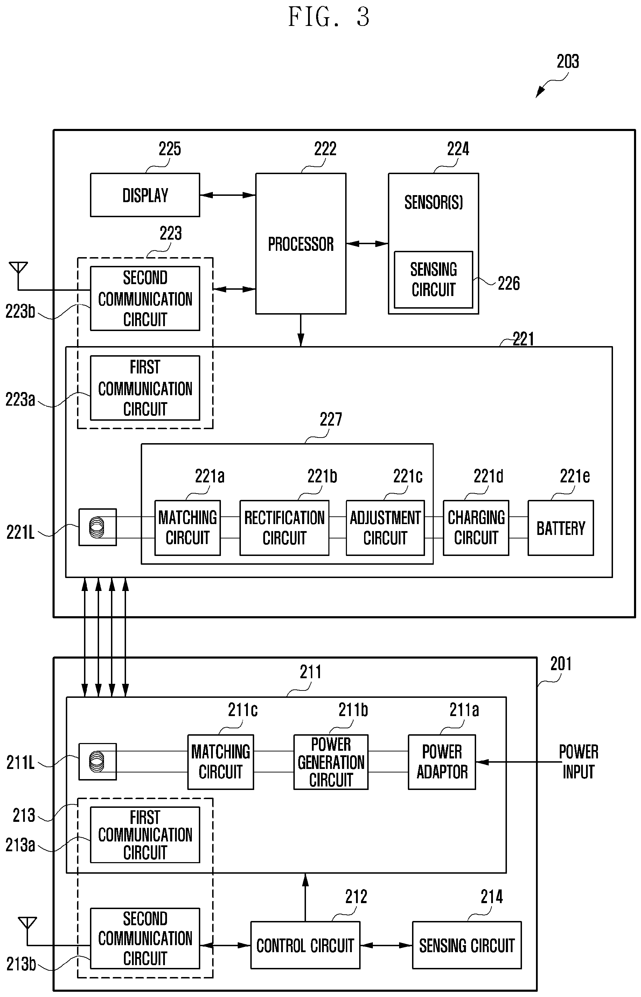

FIG. 3 is a block diagram illustrating a wireless charging system according to various embodiments.

Referring to FIG. 3, the wireless charging system may include the electronic device 201 and the external electronic device 203. When the external electronic device 203 is mounted on the electronic device 201, the electronic device 201 may wirelessly supply power to the external electronic device 203.

In an embodiment, the electronic device 201 may include an electronic device (e.g., a portable communication device (smartphone)) capable of operating in a power transmission mode.

In an embodiment, the electronic device 201 may include a power transmission circuit 211, a control circuit 212, a communication circuit 213, and/or a sensing circuit 214.

In an embodiment, the power transmission circuit 211 may include a power adapter 211a configured to receive electricity (or power) from the outside and appropriately convert an input power voltage, a power generation circuit 211b configured to generate power, or a matching circuit 211c configured to maximize efficiency between a transmission coil 211L and a reception coil 221L.

In an embodiment, the power transmission circuit 211 may include a plurality of power adapters 211a, power generation circuits 211b, transmission coils 211L, or matching circuits 211c to in order to transmit power to a plurality of external electronic devices (e.g., the earbuds 205, the smartwatch 207, and the smartphone 209).

In an embodiment, the control circuit 212 may perform overall control of the electronic device 201, and may generate various messages required for wireless power transmission and transfer the same to the communication circuit 213.

In an embodiment, the control circuit 212 may calculate power (or the amount of power) to be transmitted to the external electronic device 203, based on information received from the communication circuit 213.

In an embodiment, the control circuit 212 may control the power transmission circuit 211 such that power generated by the transmission coil 211L is transmitted to an Rx device 301.

In an embodiment, the communication circuit 213 may include at least one of a first communication circuit 213a or a second communication circuit 213b. The first communication circuit 213a may communicate with a first communication circuit 223a of the external electronic device 203 by using the same or adjacent frequency as a frequency used for power transmission by the transmission coil 211L (e.g., in-band scheme).

In an embodiment, the first communication circuit 213a may communicate with the first communication circuit 223a of the external electronic device 203 by using the transmission coil 211L. Data (or a communication signal) generated by the first communication circuit 213a may be transmitted by using the transmission coil 211L. The first communication circuit 213a may transfer data to the external electronic device 203 by using a frequency shift keying (FSK) modulation scheme.

In an embodiment, the first communication circuit 213a may communicate with the first communication circuit 223a of the external electronic device 203 by changing a frequency of a power signal transferred through the transmission coil 211L. Alternatively, the first communication circuit 213a may communicate with the first communication circuit 223a of the external electronic device 203 by including data in a power signal generated by the power generation circuit 211b. For example, the first communication circuit 313a may increase or decrease a frequency of a power transmission signal to express data.

In an embodiment, the second communication circuit 213b may communicate with a second communication circuit 223b of the external electronic device 203, for example, by using a frequency different from a frequency used for power transfer by the transmission coil 211L (e.g., outband scheme). For example, the second communication circuit 213b may acquire information associated with a charging state (e.g., a voltage value after a rectifier, a rectified voltage value (e.g., Vrect) information, information on a current (e.g., Iout) flowing through the coil 221L or a rectification circuit 221b, various packets, and/or messages) from the second communication circuit 223b by using one of various short-range communication schemes, such as Bluetooth, Bluetooth low energy (BLE), Wi-Fi, and near field communication (NFC).

In an embodiment, the sensing circuit 214 may include at least one sensor, and may sense at least one state of the external electronic device 203 by using the at least one sensor.

In an embodiment, the sensing circuit 214 may include at least one of a temperature sensor, a movement sensor, or a current (or voltage) sensor, and may sense a temperature state of the electronic device 201 by using the temperature sensor, sense a movement state of the electronic device 201 by using the movement sensor, and sense a state of an output signal of the electronic device 201, for example, a current size, a voltage size, or a power size, by using the current (or voltage) sensor.

In an embodiment, the current (or voltage) sensor may measure a signal in the power transmission circuit 211. The current (or voltage) sensor may measure a signal in at least a portion of the matching circuit 211 c or the power generation circuit 211b. For example, the current (or voltage) sensor may include a circuit for measuring a signal at a front end of the coil 211L.

In an embodiment, the sensing circuit 214 may be a circuit for detecting a foreign object (e.g., foreign object detection (FOD)).

In an embodiment, the external electronic device 203 may include a power reception circuit 221, a processor 222, a communication circuit 223, and a sensor(s) 224. In the Rx device 301, a description of a component corresponding to the electronic device 201 may be partially omitted.

In an embodiment, the power reception circuit 221 may include the reception coil 221L for wirelessly receiving power from the electronic device 201, a reception IC 227, a charging circuit (e.g., a PMIC or a switched capacitor voltage divider) 221d, or a battery 221e (e.g., the battery 189).

In an embodiment, the reception IC 227 may include a matching circuit 221a connected to the reception coil 221L, the rectification circuit 221b for rectifying received AC power into DC, or an adjustment circuit (e.g., LDO) 221c for adjusting a charging voltage.

In an embodiment, the processor 222 may perform overall control of the external electronic device 203 and may generate various messages necessary for wireless power reception and transfer the same to the communication circuit 223.

In an embodiment, the communication circuit 223 may include at least one of the first communication circuit 223a or the second communication circuit 223b. The first communication circuit 223a may communicate with the electronic device 201 through the reception coil 221L.

In an embodiment, the first communication circuit 223a may communicate with the first communication circuit 213a by using the reception coil 221L. Data (or communication signal) generated by the first communication circuit 223a may be transmitted by using the reception coil 221L. The first communication circuit 223a may transfer data to the electronic device 201 by using an amplitude shift keying (ASK) modulation scheme. The second communication circuit 223b may communicate with the electronic device 201 by using any one of various short-range communication schemes such as Bluetooth, BLE, Wi-Fi, and NFC.

In an embodiment, a packet, information, or data transmitted and received by the electronic device 201 and the external electronic device 203 may use at least one of the first communication circuit 223a or the second communication circuit 223b.

In an embodiment, the sensor(s) 324 may include at least some of a current/voltage sensor, a temperature sensor, an illuminance sensor, or an acceleration sensor.

In an embodiment, the sensor(s) 324 may be the same as or separate components from the sensor module 176 in FIG. 1.

In an embodiment, a display 225 may display various display information needed for wireless power transmission and reception.

In an embodiment, the sensing circuit 226 may sense the electronic device 201 by sensing a detection signal or received power from the electronic device 201. The sensing circuit 226 may sense a signal change at an input/output terminal of the coil 221L, the matching circuit 221a, or the rectification circuit 221b, due to a signal generated in the coil 221L based on a signal output from the electronic device 201.

In an embodiment, the sensing circuit 226 may be included in the power reception circuit 221.

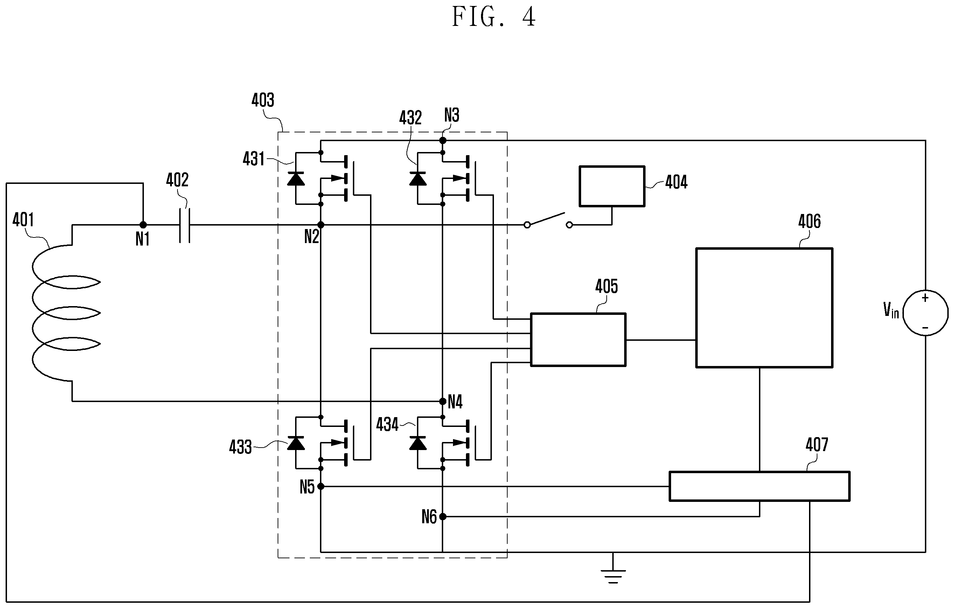

FIG. 4 is a diagram illustrating the power transmission circuit 211 of the electronic device 201 according to an embodiment of the disclosure.

In an embodiment, the power transmission circuit 211 may include a coil 401 (e.g., the transmission coil 211L), a capacitor 402, an inverter 403, a voltage circuit 404, a driving circuit 405, a processor 406 (e.g., the control circuit 212), and a Q-factor measurement circuit (first Q-factor measure circuitry) 407.

In an embodiment, the processor 406 may include the processor 120 in FIG. 1 and/or the control circuit 212 in FIG. 3.

In an embodiment, the coil 401 may be connected between a first node (N1) and a fourth node (N4) of the inverter 403 (The coil 401 may be connected between a first node (N1) and a fourth node (N4) of the inverter 403). The capacitor 402 may be connected between the first node N1 and a second node N4 of the inverter 403. The inverter 403 may be connected between an input voltage (Vin) and a ground. The input voltage (Vin) may be a voltage supplied to the inverter 403. The input voltage (Vin) may be a voltage for supplying power to the coil 401 and the capacitor 402 in order to measure a Q-factor or Q-ping.

In an embodiment, the voltage circuit 404 may be connected to the circuit of the inverter 403 through a switch. The voltage circuit 404 may be connected to the second node (N2). The voltage circuit 404 may be a circuit for supplying power to (charging) the coil 401 and the capacitor 402. For example, the voltage circuit 404 may supply power to the coil 401 and the capacitor 402 in order to measure a Q-factor or Q-ping.

In an embodiment, the driving circuit 405 may control an operation of the inverter 403 under the control of the processor 406. The driving circuit 405 may be connected to gates of a plurality of switches (e.g., field effect transistors) included in the inverter 403. The driving circuit 405 may control on/off of a plurality of switches 431, 432, 433, and 434 included in the inverter.

In an embodiment, the Q-factor measurement circuit 407 may be connected to the first node (N1). The Q-factor measurement circuit 407 may measure a voltage or current of an LC resonant node through the coil 401 and the capacitor 402. The Q-factor measurement circuit 407 may transmit a damping coefficient or Q-factor of the measured voltage or current to the processor 406. The Q-factor measurement circuit 407 may be connected to a fifth node (N5) and/or a sixth node (N6). The Q-factor measurement circuit 407 may measure the voltage or current of the LC resonant node through the coil 401 and the capacitor 402. The Q-factor measurement circuit 407 may transmit a damping coefficient or Q-factor of the measured voltage or current to the processor 406.

In an embodiment, the inverter 403 may include a plurality of switches (e.g., field effect transistors). The inverter 403 may be a full bridge inverter. However, the inverter 403 is not limited thereto, and may be a half bridge inverter. The first switch 431 may be connected between the second node N2 and a third node N3. The second switch 432 may be connected between the third node N3 and the fourth node N4. The third switch 433 may be connected between the second node (N2) and a fifth node (N5). The fourth switch 434 may be connected between the fourth node N4 and the sixth node N6. The third node (N3) may be connected to an input voltage (Vin). The fifth node (N5) and the sixth node (N6) may be connected to the ground.

In an embodiment, the processor 403 may charge the coil 401 and the capacitor 402 in order to measure a Q-factor or Q-ping. The operation of charging the coil 401 and the capacitor 402 may be as follows. The processor 403 may control the driving circuit 405 to control the first switch 431, the second switch 432, and the third switch 433 to be in the off state and to control the fourth switch 434 to be in the on state. The processor 403 may close a switch connecting the voltage circuit (Vdc) and the second node (N2), thereby supplying a voltage of the voltage circuit (Vdc) to the coil 401 and the capacitor 402. In another embodiment, the first switch 431 may be controlled to be on so that an input voltage (Vin) may be supplied to the coil 401 and the capacitor 402.

In an embodiment, after charging power to the coil 401 and the capacitor 402, the processor 403 may control the driving circuit 405 to control the first switch 431 and the second switch 432 to be in the off state, and control the third switch 433 and the fourth switch 434 to be in the on state. In addition, the processor 403 may open the switch connecting the voltage circuit (Vdc) and the second node (N2) to block a voltage supplied to the coil 401 and the capacitor 402. In this instance, the Q-factor measurement circuit 407 may measure a damping coefficient, Q-ping, or Q factor of a current or voltage of the LC resonant node, and transmit the same to the processor 403.

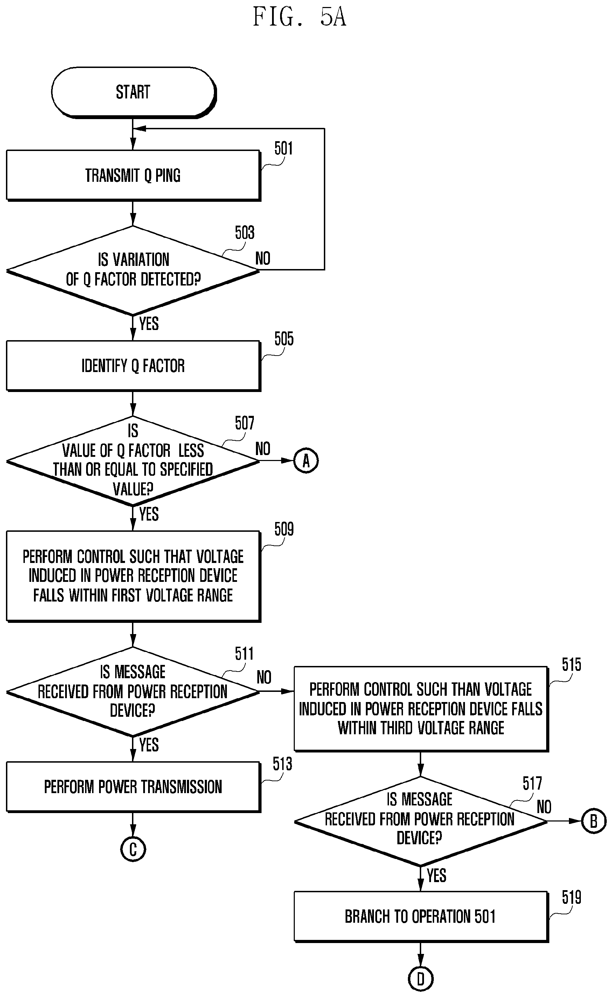

FIG. 5A is a flowchart illustrating a power transmission method of the electronic device 201 according to an embodiment of the disclosure.

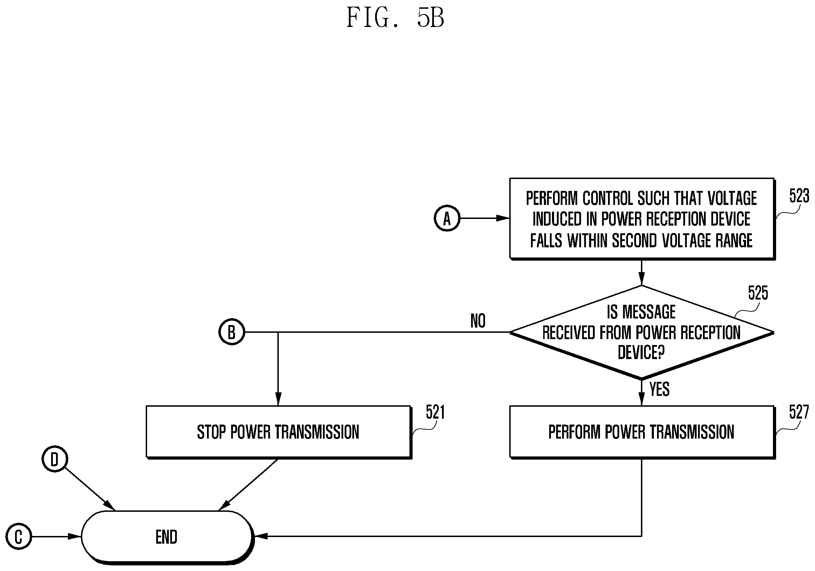

FIG. 5B is a flowchart illustrating a power transmission method of the electronic device 201 according to an embodiment of the disclosure.

In an embodiment, the electronic device 201 may include a memory (e.g., the memory 130 in FIG. 1). The memory (e.g., the memory 130 in FIG. 1) may store instructions. The instructions, when executed by the processor 406, may cause the electronic device 201 to perform the power transmission method in FIGS. 5A and 5B.

Referring to FIGS. 5A and 5B, the electronic device 201 may transmit a Q ping through the power transmission circuit 211 in operation 501 under the control of the processor 406.

In an embodiment, in operation 501, the instructions, when executed by the processor 406, may cause the electronic device 201 to transmit a Q ping through the power transmission circuit 211.

Referring to FIG. 4, the electronic device 201 may charge the coil 401 and the capacitor 402, and then measure a damping coefficient of a current or voltage of an LC resonant node, a Q-ping, or a Q factor.

In an embodiment, the electronic device 201 may determine whether a variation of a Q factor is detected, under the control of the processor 406 in operation 503.

In an embodiment, in operation 503, the instructions, when executed by the processor 406, may cause the electronic device 201 to determine whether a variation of the Q factor is detected.

In an embodiment, when a variation of the Q factor is detected, the electronic device 201 may branch to operation 505 from operation 503.

In an embodiment, if a variation of the Q factor is not detected, the electronic device 201 may branch to operation 501 from operation 503.

In an embodiment, the electronic device 201 may identify a measured Q factor, under the control of the processor 406 in operation 505.

In an embodiment, in operation 505, the instructions, when executed by the processor 406, may cause the electronic device 201 to identify the measured Q factor.

In an embodiment, the electronic device 201 may determine whether a value of the identified Q factor is less than or equal to a specified value, under the control of the processor 406 in operation 507.

In an embodiment, in operation 507, the instructions, when executed by the processor 406, may cause the electronic device 201 to determine whether the value of the identified Q factor is less than or equal to the specified value.

In an embodiment, if the value of the identified Q factor is less than or equal to the specified value, the electronic device 201 may branch to operation 509 from operation 507.

In an embodiment, if the value of the identified Q factor is greater than the specified value, the electronic device 201 may branch to operation 523 from operation 507.

In an embodiment, if the value of the identified Q factor is less than or equal to the specified value, the electronic device 201 may determine that a power reception device is an electronic device having a relatively small coil size, for example, a smartwatch or earbuds.

In an embodiment, if the value of the identified Q factor is greater than the designated value, the electronic device 201 may determine that the power reception device is an electronic device having a relatively large coil, such as a smartphone.

In an embodiment, under the control of the processor 406, the electronic device 201 may transmit power to the power reception device (e.g., the external electronic device 203) within a first voltage range in operation 509.

In an embodiment, in operation 509, when executed by the processor 406, the instructions may cause the electronic device 201 to transmit power to the power reception device (e.g., the external electronic device 203) within the first voltage range.

In an embodiment, the electronic device 201 may perform control such that a voltage induced in the power reception device (e.g., the external electronic device 203) falls within the first voltage range, under the control of the processor 406 in operation 509.

In an embodiment, in operation 509, the instructions, when executed by the processor 406, may cause the electronic device 201 to perform control such that the voltage induced in the power reception device (e.g., the external electronic device 203) falls within the first voltage range.

In an embodiment, the electronic device 201 may control power output from the power transmission circuit 211 such that the voltage induced in the power reception device (e.g., the external electronic device 203) falls within the first voltage range, under the control of the processor 406 in operation 509.

In an embodiment, in operation 509, the instructions, when executed by the processor 406, may cause the electronic device 201 to control power output from the power transmission circuit 211 such that the voltage induced in the power reception device (e.g., the external electronic device 203) falls within the first voltage range.

In an embodiment, the electronic device 201 may transmit power to the power reception device (e.g., the external electronic device 203) within a second voltage range, under the control of the processor 406 in operation 523.

In an embodiment, in operation 523, the instructions, when executed by the processor 406, may cause the electronic device 201 to transmit power to the power reception device (e.g., the external electronic device 203) within the second voltage range.

In an embodiment, the electronic device 201 may perform control such that the voltage induced in the power reception device (e.g., the external electronic device 203) falls within the second voltage range, under the control of the processor 406 in operation 523.

In an embodiment, in operation 523, the instructions, when executed by the processor 406, may cause the electronic device 201 to perform control such that the voltage induced in the power reception device (e.g., the external electronic device 203) falls within the second voltage range.

In an embodiment, the electronic device 201 may control power output from the power transmission circuit 211 such that the voltage induced in the power reception device (e.g., the external electronic device 203) falls within the second voltage range, under the control of the processor 406 in operation 523.

In an embodiment, in operation 523, the instructions, when executed by the processor 406, may cause the electronic device 201 to control power output from the power transmission circuit 211 such that the voltage induced in the power reception device (e.g., the external electronic device 203) falls within the second voltage range.

In an embodiment, the second voltage range may have a higher voltage level than the first voltage range.

In an embodiment, in order to perform control such that the voltage induced in the power reception device (e.g., the external electronic device 203) falls within first voltage range, the electronic device 201 may output a digital ping at a strength that falls within a fourth voltage range, under the control of the processor 406 in operation 509. The electronic device 201 may control the power transmission circuit 211 to output the digital ping at a strength of a fourth voltage in operation 509, under the control of the processor 406.

In an embodiment, in order to perform control such that the voltage induced in the power reception device (e.g., the external electronic device 203) falls within the first voltage range, the instructions, when executed by the processor 406, may cause the electronic device 201 to output the digital ping at the strength that falls within the fourth voltage range in operation 509. In operation 509, the instructions, when executed by the processor 406, may cause the electronic device 201 to control the power transmission circuit 211 to output the digital ping at the strength of the fourth voltage.

In an embodiment, the fourth voltage range may be related to power transmitted (TX) by the electronic device 201 to the external electronic device 203. The fourth voltage range may be output within a predetermined range, and the range may be adjusted based on a Q factor.

In an embodiment, in order to perform control such that the voltage induced in the power reception device (e.g., the external electronic device 203) falls within the second voltage range, the electronic device 201 may output a digital ping at a strength that falls within a fifth voltage range, under the control of the processor 406 in operation 523. Under the control of the processor 406, the electronic device 201 may control the power transmission circuit 211 so as to output the digital ping at the strength that falls within the fifth voltage range in operation 523.

In an embodiment, in order to perform control such that the voltage induced in the power reception device (e.g., the external electronic device 203) falls within the second voltage range, the instructions, when executed by the processor 406, may cause the electronic device 201 to output the digital ping at the strength that falls within the fifth voltage range in operation 523. In operation 523, when executed by the processor 406, the instructions may cause the electronic device 201 to control the power transmission circuit 211 to output the digital ping at the strength that falls within the fifth voltage range.

In an embodiment, when the electronic device 201 transmits the digital ping to the power reception device (e.g., the external electronic device 203), the power reception device (e.g., the external electronic device 203) may have power induced therein and receive power from the electronic device 201.

In an embodiment, the fifth voltage range may have a higher voltage level than the fourth voltage range. In an embodiment, the second voltage range may have a higher voltage level than the first voltage range.

In an embodiment, in order to perform control such that the voltage induced in the power reception device (e.g., the external electronic device 203) falls within the first voltage range, the electronic device 201 may output the power, current, and/or voltage to be transmitted at a first frequency, under the control of the processor 406 in operation 509. Under the control of the processor 406, the electronic device 201 may control the power transmission circuit 211 so that the transmitted power, current, and/or voltage is output at the first frequency in operation 509. The first voltage range may be a voltage range induced in the power reception device when the power transmission device performs output within the fourth voltage range.

In an embodiment, in order to perform control such that the voltage induced in the power reception device (e.g., the external electronic device 203) falls within first voltage range, the instructions, when executed by the processor 406, may cause the electronic device 201 to output the power, current, and/or voltage to be transmitted at the first frequency in operation 509. In operation 509, the instructions, when executed by the processor 406, may cause the electronic device 201 to control the power transmission circuit 211 to output the power, current, and/or voltage to be transmitted at the first frequency.

In an embodiment, in order to perform control such that the voltage induced in the power reception device (e.g., the external electronic device 203) falls within the second voltage range, the electronic device 201 may output the power, current, and/or voltage to be transmitted at a second frequency, under the control of the processor 406 in operation 523. Under the control of the processor 406 in operation 523, the electronic device 201 may control the power transmission circuit 211 to output the power, current, and/or voltage to be transmitted at the second frequency. The second voltage range may be a voltage range induced in the power reception device when the power transmission device performs output within the fifth voltage range.

In an embodiment, in order to perform control such that the voltage induced in the power reception device (e.g., the external electronic device 203) falls within the second voltage range, the instructions, when executed by the processor 406, may cause the electronic device 201 to output the power, current, and/or voltage to be transmitted at the second frequency in operation 523. In operation 523, the instructions, when executed by the processor 406, may cause the electronic device 201 to control the power transmission circuit 211 to output the power, current, and/or voltage to be transmitted at the second frequency.

In an embodiment, in order to perform control such that the voltage induced in the power reception device (e.g., the external electronic device 203) falls within the first voltage range, the electronic device 201 may control an operating frequency of the inverter 403 to be the first frequency, under the control of the processor 406 in operation 509. Under the control of the processor 406, the electronic device 201 may control the power transmission circuit 211 such that the inverter 403 uses the first frequency as an operating frequency in operation 509.

In an embodiment, in order to perform control such that the voltage induced in the power reception device (e.g., the external electronic device 203) falls within the first voltage range, the instructions, when executed by the processor 406, may cause the electronic device 201 to control the operating frequency of the inverter 403 to be the first frequency in operation 509. In operation 509, when executed by the processor 406, the instructions may cause the electronic device 201 to control the power transmission circuit 211 so that the inverter 403 uses the first frequency as an operating frequency.

In an embodiment, in order to perform control such that the voltage induced in the power reception device (e.g., the external electronic device 203) falls within the second voltage range, the electronic device 201 may control the operating frequency of the inverter 403 to be the second frequency, under the control of the processor 406 in operation 523. Under the control of the processor 406, the electronic device 201 may control the power transmission circuit 211 so that the inverter 403 uses the second frequency as an operating frequency in operation 523.

In an embodiment, in order to perform control such that the voltage induced in the power reception device (e.g., the external electronic device 203) falls within the second voltage range, the instructions, when executed by the processor 406, may cause the electronic device 201 to control the operating frequency of the inverter 403 to be the second frequency in operation 523. In operation 523, the instructions, when executed by the processor 406, may cause the electronic device 201 to control the power transmission circuit 211 so that the inverter 403 has the second frequency as an operating frequency.

In an embodiment, the second frequency may be a resonant frequency when the electronic device 201 transmits power. The first frequency may be a frequency used for transmission within the fourth voltage range.

In an embodiment, in order to perform control such that the voltage induced in the power reception device (e.g., the external electronic device 203) falls within the first voltage range, the electronic device 201 may control an input voltage (Vin) input to the inverter 403 to fall within the fourth voltage range under the control of the processor 406 in operation 509. Under the control of the processor 406, the electronic device 201 may control the power transmission circuit 211 such that the input voltage (Vin) input to the inverter 403 falls within the fourth voltage range in operation 509.

In an embodiment, in order to perform control such that the voltage induced in the power reception device (e.g., the external electronic device 203) falls within first voltage range, the instructions, when executed by the processor 406, may cause the electronic device 201 to control the input voltage (Vin) input to the inverter 403 to fall within the fourth voltage range in operation 509. In operation 509, the instructions, when executed by the processor 406, may cause the electronic device 201 to control the power transmission circuit 211 such that the input voltage (Vin) input to the inverter 403 falls within the fourth voltage range.

In an embodiment, in order to perform control such that the voltage induced in the power reception device (e.g., the external electronic device 203) falls within the first voltage range, the electronic device 201 may control an input voltage (Vin) input to the inverter 403 to fall within the fifth voltage range, under the control of the processor 406 in operation 523. Under the control of the processor 406, the electronic device 201 may control the power transmission circuit 211 such that the input voltage (Vin) input to the inverter 403 falls within the fifth voltage range in operation 523.

In an embodiment, in order to perform control such that the voltage induced in the power reception device (e.g., the external electronic device 203) falls within the first voltage range, the instructions, when executed by the processor 406, may cause the electronic device 201 to control the input voltage (Vin) input to the inverter 403 to fall within the fifth voltage range in operation 523. In operation 523, the instructions, when executed by the processor 406, may cause the electronic device 201 to control the power transmission circuit 211 such that the input voltage (Vin) input to the inverter 403 falls within the fifth voltage range.

In an embodiment, the second voltage level may have a higher voltage level than the first voltage level.

In an embodiment, in the electronic device 201, transmission power, current, and/or voltage output from the coil 401 may be changed based on a voltage level of the input voltage (Vin) input to the inverter 403. As the voltage of the input voltage (Vin) input to the inverter 403 increases, the transmission power, current, and/or voltage output from the coil 401 may increase.

In an embodiment, the electronic device 201 may determine whether a message is received from the power reception device (e.g., the external electronic device 203) under the control of the processor 406 in operation 511. The message received from the power reception device (e.g., the external electronic device 203) may include a signal strength packet (SSP). The message received from the power reception device (e.g., the external electronic device 203) may include information for informing the electronic device 201 of power reception. The message received from the power reception device (e.g., the external electronic device 203) may include information associated with a strength of received power.

In an embodiment, in operation 511, the instructions, when executed by the processor 406, may cause the electronic device 201 to determine whether the message is received from the power reception device (e.g., the external electronic device 203).

In an embodiment, upon receiving the message from the power reception device (e.g., the external electronic device 203), the electronic device 201 may branch to operation 513 in operation 511.

In an embodiment, when the message is not received from the power reception device (e.g., the external electronic device 203), the electronic device 201 may branch to operation 515 in operation 511.

In an embodiment, under the control of the processor 406, the electronic device 201 may control the power transmission circuit 211 to transmit power to the power reception device (e.g., the external electronic device 203) in operation 513.

In an embodiment, in operation 513, the instructions, when executed by the processor 406, may cause the electronic device 201 to control the power transmission circuit 211 to transmit power to the power reception device (e.g., the external electronic device 203).

In an embodiment, the electronic device 201 may control the power transmission circuit 211 to transmit power such that the voltage induced in the power reception device (e.g., the external electronic device 203) falls within the first voltage range under the control of the processor 406 in operation 513.

In an embodiment, in operation 513, the instructions, when executed by the processor 406, may cause the electronic device 201 to control the power transmission circuit 211 to transmit power such that the voltage induced in the power reception device (e.g., the external electronic device 203) falls within the first voltage range.

In an embodiment, the electronic device 201 may control the power transmission circuit 211 to control the voltage induced in the power reception device (e.g., the external electronic device 203) to fall within the third voltage range under the control of the processor 406 in operation 515. The third voltage range of operation 515 may be the same as the second voltage range of operation 523.

In an embodiment, in operation 515, the instructions, when executed by the processor 406, may cause the electronic device 201 to control the power transmission circuit 211 to control the voltage induced in the power reception device (e.g., the external electronic device 203) to fall within the third voltage range.

In an embodiment, the third voltage range may have a higher voltage level than the first voltage range.

In an embodiment, the electronic device 201 may determine whether a message is received from the power reception device (e.g., the external electronic device 203), under the control of the processor 406 in operation 517. The message of operation 517 may be the same as the message of operation 511.

In an embodiment, in operation 517, the instructions, when executed by the processor 406, may cause the electronic device 201 to determine whether the message is received from the power reception device (e.g., the external electronic device 203).

In an embodiment, when the message is received from the power reception device (e.g., the external electronic device 203), the electronic device 201 may branch to operation 519 in operation 517.

In an embodiment, when the message is not received from the power reception device (e.g., the external electronic device 203), the electronic device 201 may branch to operation 521 in operation 517.

In an embodiment, under the control of the processor 406, the electronic device 201 may transmit a Q ping or branch to operation 501 in operation 519. The reason that the electronic device 201 transmits the Q ping or branches to operation 501 is to transmit power after alignment since it is determined that the power reception device (e.g., the external electronic device 203) is not completely aligned with the electronic device 201.

In an embodiment, in operation 519, when executed by the processor 406, the instructions may cause the electronic device 201 to transmit the Q ping or branch to operation 501.

In an embodiment, the electronic device 201 may branch to operation 501 of transmitting a Q ping in operation 519, but is not limited thereto. The electronic device 201 may control the power transmission circuit 211 such that the third voltage range may be increased in step. When the third voltage range is smaller than a specified voltage level, the electronic device 201 may determine that the external electronic device 203 is not completely aligned with a power transmission/reception path of the electronic device 201 but is capable of being charged, and perform power transmission.

In an embodiment, the electronic device 201 may control the power transmission circuit 211 to stop power transmission, under the control of the processor 406 in operation 521.

In an embodiment, in operation 521, the instructions, when executed by the processor 406, may cause the electronic device 201 to control the power transmission circuit 211 to stop power transmission.

In an embodiment, the electronic device 201 may determine that an object on the electronic device 201 is a foreign object and may stop power transmission under the control of the processor 406 in operation 521.

In an embodiment, in operation 521, the instructions, when executed by the processor 406, may cause the electronic device 201 to determine the object on the electronic device 201 as a foreign object and to stop power transmission.

In an embodiment, the electronic device 201 may control the power transmission circuit 211 to control the voltage induced in the power reception device (e.g., the external electronic device 203) to fall within the second voltage range, under the control of the processor 406 in operation 523.

In an embodiment, in operation 523, when executed by the processor 406, the instructions may cause the electronic device 201 to control the power transmission circuit 211 such that the voltage induced in the power reception device (e.g., the external electronic device 203) falls within the second voltage range.

In an embodiment, the electronic device 201 may determine whether a message is received from the power reception device (e.g., the external electronic device 203) under the control of the processor 406 in operation 525. The message of operation 525 may be the same as the message of operation 511.

In an embodiment, in operation 525, the instructions, when executed by the processor 406, may cause the electronic device 201 to determine whether the message is received from the power reception device (e.g., the external electronic device 203).

In an embodiment, when the message is received from the power reception device (e.g., the external electronic device 203), the electronic device 201 may branch to operation 527 in operation 525.

In an embodiment, when the message is not received from the power reception device (e.g., the external electronic device 203), the electronic device 201 may branch to operation 521 in operation 525.

In an embodiment, the electronic device 201 may control the power transmission circuit 211 to transmit power to the power reception device (e.g., the external electronic device 203) under the control of the processor 406 in operation 527.

In an embodiment, in operation 527, when executed by the processor 406, the instructions may cause the electronic device 201 to control the power transmission circuit 211 to transmit power to the power reception device (e.g., the external electronic device 203).

In an embodiment, the electronic device 201 may control the power transmission circuit 211 to transmit power such that the voltage induced in the power reception device (e.g., the external electronic device 203) falls within the second voltage range, under the control of the processor 406 in operation 527.

In an embodiment, in operation 527, when executed by the processor 406, the instructions may cause the electronic device 201 to control the power transmission circuit 211 to transmit power such that the voltage induced in the power reception device (e.g., the external electronic device 203) falls within the second voltage range.

In an embodiment, when a measured Q-factor is less than or equal to a specified value, the electronic device 201 may determine whether the power reception device (e.g., the external electronic device 203) is in a state requiring alignment, is a foreign object, or is an electronic device having a relatively small Q-factor, so as to identify whether to transmit power.

In an embodiment, since the electronic device 201 transmits power in consideration of alignment between the coils and power reception capability of the power reception device (e.g., the external electronic device 203), thereby reducing a power transmission interruption phenomenon or a charging disconnection phenomenon.

In an embodiment, the electronic device 201 may transmit power in consideration of the alignment of the coils and the power reception capability of the power reception device (e.g., the external electronic device 203), thereby preventing the power reception device (e.g., the external electronic device 203) from being damaged due to high-voltage transmission.

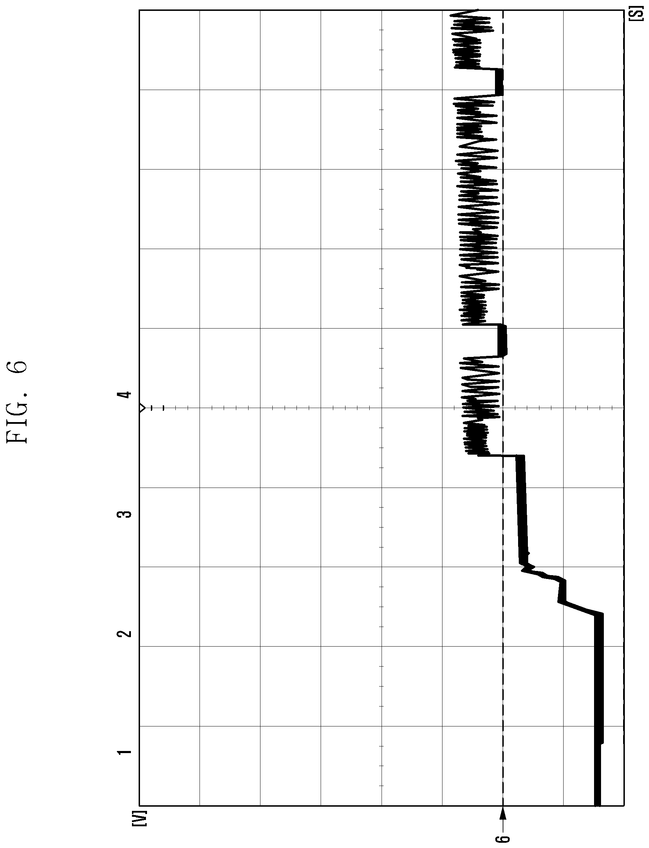

FIG. 6 is a graph illustrating power induced in a power reception device (e.g., the external electronic device 203) when the electronic device 201 transmits power within a fifth voltage range according to an embodiment of the disclosure.

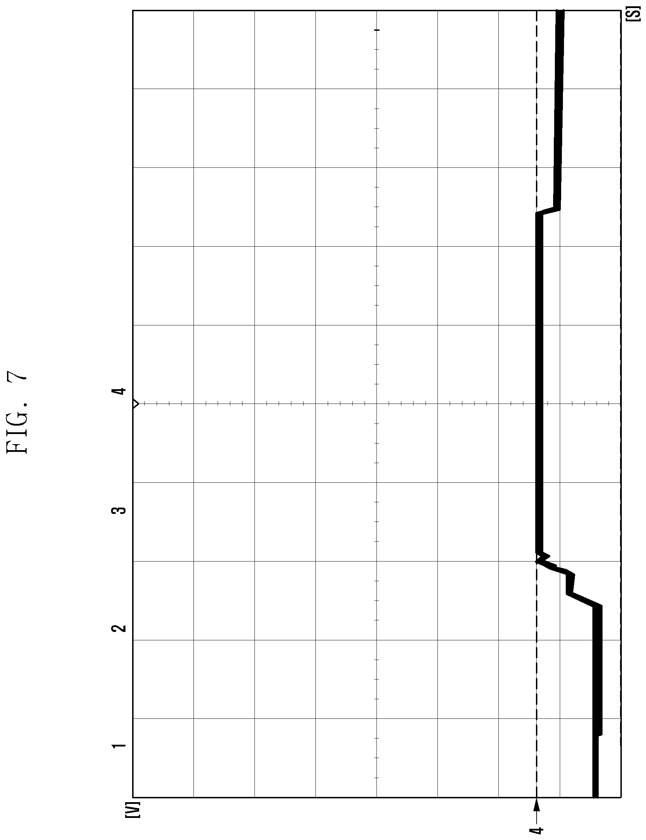

FIG. 7 is a graph illustrating power induced in a power reception device (e.g., the external electronic device 203) when the electronic device 201 transmits power within a fourth voltage range according to an embodiment of the disclosure.

Referring to FIG. 6, when the electronic device 201 transmits power within the fifth power range, the power reception device (e.g., the external electronic device 203) may receive power at a voltage level of approximately 6 [V].

Referring to FIG. 7, when the electronic device 201 transmits power within the fourth power range, the power reception device (e.g., the external electronic device 203) may receive power at a voltage level of approximately 4 [V]. For example, when the power reception device (e.g., the external electronic devices 205 and 207) is the earbuds 205 or smartwatch 207, the electronic device 201 may supply, to the power reception device, wireless power (e.g., a digital ping signal) at a configured first voltage, and the power reception device (e.g., the external electronic devices 205 and 207) may receive power at a rectified voltage level of approximately 4 [V]. Since power is transmitted in consideration of power reception capability, a power transmission interruption phenomenon or a charging disconnection phenomenon may be reduced, and damage to the power reception device (e.g., the external electronic device 205 or 207) may be prevented.

In an embodiment, the electronic device 201 may include the power transmission circuit 211 and the processor 406.

In an embodiment, the processor 406 may transmit a Q ping through the power transmission circuit 211, identify, when a variation of a Q factor is detected, whether a value of the Q factor is less than or equal to a specified value, control the power transmission circuit 211 such that a voltage induced in a power reception device falls within a first voltage range when the value of the Q factor is less than or equal to the specified value, and control the power transmission circuit 211 such that a voltage induced in the power reception device falls within a second voltage range having a higher power level than the first voltage range when the value of the Q factor is greater than the specified value.

In an embodiment, the processor 406 may identify whether a message is received from the power reception device in a state in which the power transmission circuit 211 is controlled such that the voltage induced in the power reception device falls within the first voltage range, and when the message is received, control the power transmission circuit 211 to transmit power to the power reception device.

In an embodiment, when the message is not received, the processor 406 may control the power transmission circuit 211 such that the voltage induced in the power reception device falls within the second voltage range, identify whether a message is received from the power reception device in a state in which the power transmission circuit 211 is controlled such that the voltage induced in the power reception device falls within the second voltage range, and when the message is received, transmit a Q ping through the power transmission circuit 211.

In an embodiment, when the message is not received in a state in which the power transmission circuit 211 is controlled such that the voltage induced in the power reception device falls within the second voltage range, the processor 406 may perform control so as to stop power transmission.

In an embodiment, the processor 406 may identify whether a message is received from the power reception device in a state in which the power transmission circuit 211 is controlled such that the voltage induced in the power reception device falls within the second voltage range, and when the message is received, control the power transmission circuit 211 to transmit power to the power reception device.

In an embodiment, when the message is not received in a state in which the power transmission circuit 211 is controlled such that the voltage induced in the power reception device falls within the second voltage range, the processor 406 may perform control so as to stop power transmission.

In an embodiment, the processor 406 may control the power transmission circuit 211 to output a digital ping at a strength that falls within a fourth voltage range so that the voltage induced in the power reception device falls within the first voltage range, and control the power transmission circuit 211 to output a digital ping at a strength that falls within a fifth voltage range so that the voltage induced in the power reception device falls within the second voltage range.

In an embodiment, the fifth voltage range may have a higher voltage level than the fourth voltage range.

In an embodiment, the processor 406 may control the power transmission circuit 211 to output power, a current, and/or a voltage to be transmitted at a first frequency so that the voltage induced in the power reception device falls within the first voltage range, and control the power transmission circuit 211 to output power, a current, and/or a voltage to be transmitted at a second frequency so that the voltage induced in the power reception device falls within the second voltage range.

In an embodiment, the second frequency may be a resonant frequency, and the first frequency may have a higher or lower frequency than the second frequency.

In an embodiment, the processor 406 may control the power transmission circuit 211 such that an input voltage input to an inverter is output within a fourth voltage range, so as to enable the voltage induced in the power reception device to fall within the first voltage range, and control the power transmission circuit 211 such that an input voltage input to the inverter is output within a fifth voltage range, so as to enable the voltage induced in the power reception device to fall within the second voltage range.

In an embodiment, the second voltage range may have a higher voltage level than the first voltage range.

In an embodiment, the processor 406 may control the power transmission circuit 211 such that an operating frequency of an inverter becomes a first frequency, so as to enable the voltage induced in the power reception device to fall within the first voltage range, and control the power transmission circuit 211 such that an operating frequency of the inverter becomes a second frequency, so as to enable the voltage induced in the power reception device to fall within the second voltage range.

In an embodiment, a power transmission method may include an operation of transmitting a Q ping through a power transmission circuit, an operation of identifying, when a variation of a Q factor is detected, whether a value of the Q factor is less than or equal to a specified value, an operation of controlling the power transmission circuit such that a voltage induced in a power reception device falls within a first voltage range when the value of the Q factor is less than or equal to the specified value, and an operation of controlling the power transmission circuit such that the voltage induced in the power reception device falls within a second voltage range having a higher power level than the first voltage range when the value of the Q factor is greater than the specified value.

In an embodiment, the power transmission method may include an operation of identifying whether a message is received from the power reception device in a state in which the power transmission circuit is controlled such that the voltage induced in the power reception device falls within the first voltage range, and an operation of controlling the power transmission circuit to transmit power to the power reception device when the message is received.

In an embodiment, the power transmission method may include an operation of controlling the power transmission circuit such that the voltage induced in the power reception device falls within the second voltage range when the message is not received, an operation of identifying whether a message is received from the power reception device in a state in which the power transmission circuit is controlled such that the voltage induced in the power reception device falls within the second voltage range; and an operation of transmitting a Q ping through the power transmission circuit when the message is received.

In an embodiment, the power transmission method may include an operation of performing control so as to stop power transmission when the message is not received in a state in which the power transmission circuit is controlled such that the voltage induced in the power reception device falls within the second voltage range.

In an embodiment, the power transmission method includes an operation of identifying whether a message is received from the power reception device in a state in which the power transmission circuit is controlled such that the voltage induced in the power reception device falls within the second voltage range, and an operation of controlling the power transmission circuit to transmit power to the power reception device when the message is received.

In an embodiment, the power transmission method may include an operation of performing control so as to stop power transmission when the message is not received in a state in which the power transmission circuit is controlled such that the voltage induced in the power reception device falls within the second voltage range.

In an embodiment, the power transmission method may include an operation of controlling the power transmission circuit to output a digital ping at a strength of a first voltage so that the voltage induced in the power reception device falls within the first voltage range and an operation of controlling the power transmission circuit to output a digital ping at a strength of a second voltage so that the voltage induced in the power reception device falls within the second voltage range.

In an embodiment, the power transmission method may include an operation of controlling the power transmission circuit to output power, a current, and/or a voltage to be transmitted at a first frequency so that the voltage induced in the power reception device falls within the first voltage range, and an operation of controlling the power transmission circuit to output power, a current, and/or a voltage to be transmitted at a second frequency so that the voltage induced in the power reception device falls within the second voltage range.

In an embodiment, the power transmission method may include an operation of controlling the power transmission circuit such that an input voltage input to an inverter falls within a fourth voltage range, so as to enable the voltage induced in the power reception device to fall within the first voltage range, and an operation of controlling the power transmission circuit such that an input voltage input to the inverter falls within a fifth voltage range, so as to enable the voltage induced in the power reception device to fall within the second voltage range.

In an embodiment, the fifth voltage range may have a higher voltage level than the fourth voltage range.

In an embodiment, the power transmission method may include an operation of controlling the power transmission circuit such that an operating frequency of an inverter becomes a first frequency, so as to enable the voltage induced in the power reception device to fall within the first voltage range, and an operation of controlling the power transmission circuit such that an operating frequency of the inverter becomes a second frequency, so as to enable the voltage induced in the power reception device to fall within the second voltage range.

In an embodiment, the power transmission method may include an operation of controlling the power transmission circuit such that an operating frequency of an inverter becomes a first frequency, so as to enable the voltage induced in the power reception device to fall within the first voltage range, and an operation of controlling the power transmission circuit such that an operating frequency of the inverter becomes a second frequency, so as to enable the voltage induced in the power reception device to fall within the second voltage range.

The electronic device according to various embodiments set forth herein may be one of various types of electronic devices. The electronic device may include, for example, a portable communication device (e.g., a smartphone), a computer device, a portable multimedia device, a portable medical device, a camera, a wearable device, or a home appliance. The electronic device according to the embodiments of the disclosure is not limited to those described above.

It is to be understood that various embodiments of the disclosure and terms for describing the embodiments are not intended to limit the technical features disclosed herein to specific embodiments, and that the embodiments include various modifications, equivalents, or substitutions of the corresponding embodiments. With regard to the description of the drawings, similar reference numerals may be used to refer to similar or related elements. The singular form of a noun corresponding to an item may include one item or a plurality of items unless the context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. Such terms as "a first", "a second", "the first", and "the second" may be used to simply distinguish a corresponding element from another, and does not limit the elements in other aspect (e.g., importance or order). When a certain (e.g., a first) component is mentioned as being "coupled" or "connected" to another (e.g., a second) component, with or without a term "functionally" or "communicatively," it means that the certain component may be connected to the other component directly (e.g., wiredly), wirelessly, or via a third component.

As used in connection with various embodiments of the disclosure, the term "module" may include a unit implemented in hardware, software, or firmware, and may interchangeably be used with other terms, for example, "logic," "logic block," "part," or "circuitry". The module may be an integrally configured component or a minimum unit or a portion of the component, which performs one or more functions. For example, according to an embodiment, the module may be implemented in the form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of a device (e.g., the electronic device 101) may invoke and execute at least one of the stored one or more instructions from the storage medium. This allows the machine to be operated to perform at least one function according to the at least one instruction invoked. The one or more instructions may include codes generated by a compiler or code capable of being executed by an interpreter. The machine-readable storage medium may be provided in the form of a non-transitory storage medium. Here, the term "non-transitory" merely means that the storage medium is a tangible device and does not contain a signal (e.g., electromagnetic waves), and this term is not intended to distinguish a case where data is permanently stored on the storage medium and a case where data is temporarily stored.

According to an embodiment, a method according to various embodiments set forth herein may be included and provided in a computer program product. The computer program product may be traded as a product between a seller and a purchaser. The computer program product may be distributed in the form of a machine-readable storage medium (e.g., compact disc read only memory (CD-ROM)), or be distributed (e.g., downloaded or uploaded) online via an application store (e.g., Play Store TM), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each element (e.g., a module or a program) of the above-described elements may include a single entity or multiple entities and some of the multiple entities may be disposed in any other element. According to various embodiments, one or more of the above-described elements or operations may be omitted, or one or more other elements or operations may be added. Alternatively, or additionally, multiple components (e.g., modules or programs) may be integrated into a single component. In such a case, the integrated component may perform one or more functions of each of the multiple components in the same or a similar manner as performed by the corresponding one of the multiple components before the integration. According to various embodiments, operations performed by a module, a program, or other components may be executed sequentially, in parallel, repetitively, or heuristically, one or more of the operations may be executed in a different order or omitted, or one or more other operations may be added.

## Claims

1. An electronic device comprising:
a memory storing instructions;
a power transmission circuit; and
a processor,
wherein the instructions, when executed by the processor, cause the electronic device to:
transmit a Q ping through the power transmission circuit;
in case that a variation of a Q factor is detected, identify whether a value of the Q factor is less than or equal to a specified value,
in case that the value of the Q factor is less than or equal to the specified value, control the power transmission circuit such that a voltage induced in a power reception device falls within a first voltage range; and
in case that the value of the Q factor is greater than the specified value, control the power transmission circuit such that a voltage induced in the power reception device falls within a second voltage range having a higher power level than the first voltage range.

2. The electronic device of claim 1, wherein the instructions, when executed by the processor, cause the electronic device to:
identify whether a message is received from the power reception device in a state in which the power transmission circuit is controlled such that the voltage induced in the power reception device falls within the first voltage range;
in case that the message is received, control the power transmission circuit to transmit power to the power reception device;
in case that the message is not received, control the power transmission circuit such that the voltage induced in the power reception device falls within the second voltage range;
identify whether a message is received from the power reception device in a state in which the power transmission circuit is controlled such that the voltage induced in the power reception device falls within the second voltage range;
in case that the message is received, transmit the Q ping through the power transmission circuit; and
in case that the message is not received in a state in which the power transmission circuit is controlled such that the voltage induced in the power reception device falls within the second voltage range, perform control to stop power transmission.

3. The electronic device of claim 1, wherein the instructions, when executed by the processor, cause the electronic device to:
identify whether a message is received from the power reception device in a state in which the power transmission circuit is controlled such that the voltage induced in the power reception device falls within the second voltage range;
in case that the message is received, control the power transmission circuit to transmit power to the power reception device; and
in case that the message is not received in the state in which the power transmission circuit is controlled such that the voltage induced in the power reception device falls within the second voltage range, perform control to stop power transmission.

4. The electronic device of claim 1, wherein the instructions, when executed by the processor, cause the electronic device to:
control the power transmission circuit to output a digital ping at a strength falling within a fourth voltage range so that the voltage induced in the power reception device falls within the first voltage range; and
control the power transmission circuit to output a digital ping at a strength falling within a fifth voltage range so that the voltage induced in the power reception device falls within the second voltage range, and
wherein the second voltage range has a higher voltage level than the first voltage range.

5. The electronic device of claim 1, wherein the instructions, when executed by the processor, cause the electronic device to:
control the power transmission circuit to output transmission power, current, and/or voltage at a first frequency so that the voltage induced in the power reception device falls within the first voltage range; and
control the power transmission circuit to output transmission power, current, and/or voltage at a second frequency so that the voltage induced in the power reception device falls within the second voltage range, and
wherein the second frequency is a resonant frequency, and the first frequency is higher or lower than the second frequency.

6. The electronic device of claim 1, wherein the instructions, when executed by the processor, cause the electronic device to:
control the power transmission circuit to output input voltage, input to an inverter, in a fourth voltage range so that the voltage induced in the power reception device falls within the first voltage range; and
control the power transmission circuit to output input voltage, input to the inverter, in a fifth voltage range so that the voltage induced in the power reception device falls within the second voltage range, and
wherein the fifth voltage range has a higher voltage level than the fourth voltage range.

7. The electronic device of claim 1, wherein the instructions, when executed by the processor, cause the electronic device to:
control the power transmission circuit to operate an inverter at a first frequency so that the voltage induced in the power reception device falls within the first voltage range; and
control the power transmission circuit to operate the inverter at a second frequency so that the voltage induced in the power reception device falls within the second voltage range, and
wherein the second frequency is a resonant frequency, and the first frequency is higher or lower than the second frequency.

8. A power transmission method comprising:
transmitting a Q ping through a power transmission circuit;
in case that a variation of a Q factor is detected, identifying whether a value of the Q factor is less than or equal to a specified value;
in case that the value of the Q factor is less than or equal to the specified value, controlling the power transmission circuit such that a voltage induced in a power reception device falls within a first voltage range; and
in case that the value of the Q factor is greater than the specified value, controlling the power transmission circuit such that the voltage induced in the power reception device falls within a second voltage range having a higher power level than the first voltage range.

9. The method of claim 8, comprising:
identifying whether a message is received from the power reception device in a state in which the power transmission circuit is controlled such that the voltage induced in the power reception device falls within the first voltage range;
in case that the message is received, controlling the power transmission circuit to transmit power to the power reception device;
in case that the message is not received, controlling the power transmission circuit such that the voltage induced in the power reception device falls within the second voltage range;
identifying whether a message is received from the power reception device in a state in which the power transmission circuit is controlled such that the voltage induced in the power reception device falls within the second voltage range;
in case that the message is received, transmitting the Q ping through the power transmission circuit; and
in case that the message is not received in a state in which the power transmission circuit is controlled such that the voltage induced in the power reception device falls within the second voltage range, performing control to stop power transmission.

10. The method of claim 8, comprising:
identifying whether a message is received from the power reception device in a state in which the power transmission circuit is controlled such that the voltage induced in the power reception device falls within the second voltage range; and
in case that the message is received, controlling the power transmission circuit to transmit power to the power reception device.

11. The method of claim 10, comprising, in case that the message is not received in a state in which the power transmission circuit is controlled such that the voltage induced in the power reception device falls within the second voltage range, performing control to stop power transmission.

12. The method of claim 8, comprising:
controlling the power transmission circuit to output a digital ping at a strength falling within a fourth voltage range so that the voltage induced in the power reception device falls within the first voltage range; and
controlling the power transmission circuit to output a digital ping at a strength falling within a fifth voltage range so that the voltage induced in the power reception device falls within the second voltage range,
wherein the second voltage range has a higher voltage level than the first voltage range.

13. The method of claim 8, comprising:
controlling the power transmission circuit to output transmission power, current, and/or voltage at a first frequency so that the voltage induced in the power reception device falls within the first voltage range; and
controlling the power transmission circuit to output transmission power, current, and/or voltage at a second frequency so that the voltage induced in the power reception device falls within the second voltage range,
wherein the second frequency is a resonant frequency, and the first frequency is higher or lower than the second frequency.

14. The method of claim 8, comprising:
controlling the power transmission circuit to output input voltage, input to an inverter, in a fourth voltage range, so that the voltage induced in the power reception device falls within the first voltage range; and
controlling the power transmission circuit to output input voltage, input to the inverter, in a fifth voltage range so that the voltage induced in the power reception device falls within the second voltage range,
wherein the fifth voltage range has a higher voltage level than the fourth voltage range.

15. The method of claim 8, comprising:
controlling the power transmission circuit to operate an inverter at a first frequency so that the voltage induced in the power reception device falls within the first voltage range; and
controlling the power transmission circuit to operate the inverter at a second frequency so that the voltage induced in the power reception device falls within the second voltage range,
wherein the second frequency is a resonant frequency, and the first frequency is higher or lower than the second frequency.
